# EUROPEAN PATENT APPLICATION

(11) **EP 1 705 212 A1**
(43) Date of publication of application: **27.09.2006**
(21) Application number: 05007393.1
(22) Date of filing: 24.03.2005
(51) Int. Cl.: C08J 9/32

(54) **Expandable thermoplastic gel composition**

(71) Applicant: KRATON Polymers Research B.V., 1030 BH Amsterdam (NL)
(72) Inventor: Mayenez, Catherine Jeanne Solang, 1348 Louvain-la-Neuve (BE); Dupont, Martine Jeanne, 1348 Louvain-la-Neuve (BE); Migchels, Peter, 1348 Louvain-la-Neuve (BE)
(74) Representative: Kortekaas, Marcel C.J.A.

(57) **Abstract**

The invention concerns an expandable thermoplastic gel composition comprising (a) a block copolymer comprising at least one polymer block A derived from a monovinyl aromatic compound and at least one polymer block B derived from a conjugated diene; (b) a liquid component selected from the group consisting of extending oils, plasticizers and solvents which are compatible with the aforementioned block copolymer (a); and (c) heat expandable thermoplastic particles encapsulating heat expandable gas or liquefied gas, characterized in that the block copolymer (a) is a block copolymer that may be cross-linked by exposure to radiation and that has a monovinyl aromatic compound content from about 7% by weight to about 35% by weight based on total polymer, a total apparent molecular weight of from about 50,000 to about 1,500,000 and a vinyl content in block B of from about 10 to about 80 mole%, preferably from about 20 to 75 mole%, more preferably from about 35 to about 70 mole%. According to another aspect of the present invention, there are provided two processes for producing the expanded thermoplastic gel composition. The invention also relates to the use of an expanded thermoplastic gel composition in automotive appliances, but also in applications such as cable filling, re-enterable sealing of electrical connections, vibration damping, pressure relief, toys, cushioning, grips, therapeutic and orthopaedic devices, and even flexographic printing plates.

## Description

### Technical field

The present invention relates to an expandable thermoplastic gel composition comprising (a) a block copolymer comprising at least one polymer block A derived from a monovinyl aromatic compound and at least one polymer block B derived from a conjugated diene; (b) a liquid component selected from the group consisting of extending oils, plasticizers and solvents which are compatible with the aforementioned block copolymer (a); and (c) heat expandable thermoplastic particles encapsulating heat expandable gas or liquefied gas. The invention also relates to the use of an expandable thermoplastic gel composition, for instance in articles such as candles, air fresheners, gaskets, cushions, mattresses, pillows, toys and the like.

### Background art

Oil gels based on styrenic block copolymers are well known and are used in a variety of applications: cable filling, re-enterable sealing of electrical connections, vibration damping, pressure relief, toys, cushioning, grips, therapeutic and orthopaedic devices. In many applications, there is also a constant demand for lighter products for cost and energy savings.

From EP 1158364 a photo-polymerizable composition is known which comprises a mixture of thermoplastic-elastomeric SIS and SBS block copolymers as binder, ethylenically unsaturated monomers, plasticizer and photo-initiator. This composition may be considered an oil gel and is used to form a photo-polymerizable flexographic printing element.

P.Migchels and O.Roumache developed a technique to efficiently foam oil gels based on styrenic block copolymers in WO 9923144**.** However, these products still showed insufficient temperature resistance for certain applications like in the automotive industry where temperature resistance above 120°C is often required.

The present inventors found a way to solve the shortcomings of the known expandable oil gel compositions using a novel technology that allows the production of low density oil gels with improved temperature performance. Using this technology expanded oil gel compositions may be produced wherein the oil gel integrity is maintained at elevated temperatures, without oil bleeding problems.

### Disclosure of the invention

According to one aspect of the present invention, there is provided an expandable thermoplastic gel composition comprising (a) a block copolymer comprising at least one polymer block A derived from a monovinyl aromatic compound and at least one polymer block B derived from a conjugated diene; (b) a liquid component selected from the group consisting of extending oils, plasticizers and solvents which are compatible with the aforementioned block copolymer (a); and (c) heat expandable thermoplastic particles encapsulating heat expandable gas or liquefied gas, characterized in that the block copolymer (a) is a block copolymer that may be cross-linked by exposure to radiation and that has a monovinyl aromatic compound content from about 7% by weight to about 35% by weight based on total polymer, a total apparent molecular weight of from about 50,000 to about 1,500,000 and a vinyl content in block B of from about 10 to about 80 mole%, preferably from about 20 to 75 mole percent, more preferably from about 35 to about 70 mole%.

According to another aspect of the present invention, there is provided a process for producing an expanded thermoplastic gel composition comprising the steps of:
(1) forming an expandable thermoplastic gel composition comprising components (a), (b), (c) and optionally a photo-initiator (d);
(2) heat treating the expandable composition to cause the heat expandable thermoplastic particles (c) to expand and produce an expanded thermoplastic gel composition; and
(3) exposing the expanded thermoplastic gel composition to radiation to effect cross-linking.

According to another aspect of the present invention, there is provided a process for producing an expanded thermoplastic gel composition comprising the steps of:
(1) forming an expandable thermoplastic gel composition comprising components (a), (b), (c) and optionally a photo-initiator (d);
(2) exposing the expandable thermoplastic gel composition to radiation to effect cross-linking; and
(3) heat treating the cross-linked expandable thermoplastic gel composition to cause the said particles to expand and produce an expanded thermoplastic gel composition.

The invention also relates to the use of an expanded thermoplastic gel composition in automotive appliances, but also in applications such as cable filling, re-enterable sealing of electrical connections, vibration damping, pressure relief, toys, cushioning, grips, therapeutic and orthopaedic devices, and even flexographic printing plates.

As used herein, the term "molecular weights" refers to the apparent molecular weight in g/mol of the polymer or block of the copolymer. The molecular weights referred to in this specification and claims can be measured with gel permeation chromatography (GPC) using polystyrene calibration standards, such as is done according to ASTM 3536. GPC is a well-known method wherein polymers are separated according to molecular size, the largest molecule eluting first. The chromatograph is calibrated using commercially available polystyrene molecular weight standards. The molecular weight of polymers measured using GPC so calibrated are styrene equivalent molecular weights or apparent molecular weights. For anionically polymerized linear polymers, the polymer is essentially monodispersed and it is both convenient and adequately descriptive to report the "peak" molecular weight of the narrow molecular weight distribution observed. The peak molecular weight is usually the molecular weight of the main species shown in the chromatograph. For materials to be used in the columns of the GPC, styrene-divinyl benzene gels or silica gels are commonly used and are excellent materials. Tetrahydrofuran is an excellent solvent for polymers of the type described herein. The detector used is preferably a combination ultraviolet and refractive index detector.

Measurement of the molecular weight of a coupled star polymer may alternatively be carried out by light scattering techniques. The sample is dissolved in a suitable solvent at a concentration less than 1.0 gram of sample per 100 milliliters of solvent and filtered using a syringe and porous membrane filters of less than 0.5 microns pore size directly into the light scattering cell. The light scattering measurements are performed as a function of scattering angle and of polymer concentration using standard procedures. The differential refractive index (DRI) of the sample is measured at the same wavelength and in the same solvent used for the light scattering. The following references are relating to the hereinbefore described analysis methods:
1. Modern Size-Exclusion Liquid Chromatography, W. W. Yau, J. J. Kirkland, D. D. Bly, John Wiley & Sons, New York, NY, 1979.
2. Light Scattering from Polymer Solution, M. B. Huglin, ed., Academic Press, New York, NY, 1972.
3. W. Kaye and A. J. Havlik, Applied Optics, 12, 541 (1973).
4. M. L. McConnell, American Laboratory, 63, May, 1978.

### Mode(s) for carrying out the invention

The block copolymer suitably used as component (a) in the composition according to the present invention may be any block copolymer meeting the above mentioned requirements. Suitable block copolymers then include diblock copolymers of formula AB; triblock copolymers of formula ABA and multiblock copolymers of formulae A(BA)ₙ and AB(AB)ₙ wherein n is an integer of 2 or higher.

Component (a) is preferably a coupled block copolymer having a structure according to any one of the general formulas (AB)ₙ X, (BA)ₙ X, (ABA)ₙ X, (BAB)ₙ X as well as asymmetric or symmetric multi-armed block copolymers of the general formula (AB)ₚ X(B)_{q} with A and B as defined above, n representing an integer of 2 or higher and preferably 2 to 20, and p and q together representing similar values, depending on the functionality of the coupling agent used, of which coupling agent the residue is represented by X. Examples of coupling agents include: tin coupling agents; halogenated silicon coupling agents such as silicon tetrachloride; alkoxysilanes such as methyltrimethoxysilane, tetramethoxysilane and gamma-glycidoxypropyltrimethoxysilane; divinyl aromatic compounds such as divinylbenzene; halogenated alkanes such as dibromoethane; halogenated aromatic compounds; epoxy compounds such as the diglycidyl ether of bisphenol-A and the like and other coupling agents such as benzoic esters, CO, 2-chloropropene and 1-chloro-I,3-butadiene.

The coupled or multi-armed block copolymers may be prepared by coupling living sequentially prepared intermediate polymer chains by using any conventional coupling techniques, such as e.g. disclosed in U.S. Patents Nos. 3,231,635; 3,431,323; 3,251,905; 3,390,207; 3,598,887 and 4,219,627, all included herein by reference.

Examples of the aromatic monovinyl compound useful in the practice of the present invention include, but are not limited to styrene, alpha-methylstyrene, p-methylstyrene, o-methylstyrene, p-tert.butylstyrene, dimethylstyrene, diphenyl ethylenes such as stilbene, vinylnaphtalene, vinyltoluene (an isomeric mixture of p-methylstyrene and o-methylstyrene), vinylxylene, and mixtures thereof. A preferred monomer is styrene, optionally mixed with one monomer selected from alpha-methylstyrene, p-methylstyrene, o-methylstyrene, diphenyl-ethylene. Most preferred is substantially pure styrene monomer.

Each A polymer block may comprise minor amounts of comonomers other than an aromatic vinyl compound, .e.g. up to 5 wt% of a copolymerizable monomer such as butadiene and/or isoprene (based on the weight of the total block).

Suitable conjugated dienes to be used in the block copolymer of component (a) are 1,3-butadiene, 2-methyl-1,3-butadiene (isoprene), 2,3-dimethyl-1,3-butadiene, 1,3-pentadiene, 1,3-hexadiene or mixtures thereof. 1,3-Butadiene, isoprene or mixtures thereof are the preferred monomers. Indeed mixtures of 1,3-butadiene and isoprene may be advantageously used in amounts of about 0/100 to about 100/0 molar ratio, generally in amounts of about 20/80 to 80/20 molar ratio. Butadiene is the most preferred conjugated diene.

Note that the conjugated dienes are copolymerized either in an 1,4-fashion, resulting in an unsaturated carbon-carbon double bond in the polymer chain, or in an 1,2-fashion, where the carbon-carbon double bond is attached to the polymer chain similar to a vinyl group. The expression vinyl group hence refers to this attachment, irrespective of the conjugated diene monomer that has been used.

Each B polymer block may comprise minor amounts of comonomers other than a conjugated diene, e.g., up to 5 wt% of an aromatic vinyl compound.

A preferred block copolymer is the styrenic block copolymer having the general formula (AB)ₚ X(B)_{q}
wherein A is a poly(vinyl aromatic compound) block and B is a poly(butadiene) block having a 1,2-vinyl content of between 10 and 80 mol percent, preferably between 10 and 75 mol percent, more preferably between 35 and 70 mol percent, most preferably 45 to 65 mol percent, X is a coupling agent residue, p has a number average value of at least 1.5 and q has a number average value of 0 or higher wherein the sum of p and q values is at least 3, the block copolymer having an average bound vinylaromatic content in the range of from 7 to 35 wt%, and preferably in the range of from 10 to 20 wt%, and having a total apparent molecular weight in the range of from 50,000 to 1,500,000. This vinyl aromatic block copolymer, that is highly sensitive to radiation curing, is known from WO 93024547 which is included herein by reference.

Suitable styrenic block copolymers comprise B blocks that have an apparent molecular weight in the range of from 15,000 to 250,000 and preferably from 25,000 to 80,000 and A blocks that have an apparent molecular weight in the range of from 5,000 to 125,000 and preferably from 7,000 to 50,000 and more preferably from 10,000 to 20,000, most preferably about 15,000. The value of p is from 2 to 12, even more preferably 2 and the value of q is from 0 to 12, even more preferably 2.

Component (a) may also be a mixture of styrenic block copolymers, of which at least one is the radiation curable block copolymer. For instance, component (a) may be a mixture of various radiation curable block copolymers or a mixture of one or more radiation curable block copolymers and one or more selectively hydrogenated block copolymers (block copolymers wherein the B block(s) are hydrogenated until 20% or less of the original unsaturation is left).

Component (a) may be selectively hydrogenated, but only in part, i.e., to the extent that sufficient vinyl groups are left in block B to allow it to be cross-linked by exposure to radiation (from about 10 to about 80 mole%, preferably from about 20 to 75 mole%, more preferably from about 35 to 70 mole%).

The expandable thermoplastic gel composition preferably comprises from 10 to 40, more preferably from 15 to 35 weight percent of component (a).

The expandable composition preferably comprises from 60 to 90 weight percent of a liquid component (b) selected from the group consisting of extending oils, vegetable and animal oils, olefin oligomers, plasticizers and solvents which are compatible with the cross-linkable block copolymer. The selection of which of these components to use is a function of the end use intended for the composition. For example, when the end use is a candle, extending oil would be used. If the end use is a gasket or toy, a plasticizer is often used. If the end use is an air freshener, a volatile solvent and a fragrance would be used. Also mixtures of these components may be used.

Extending oils used to make articles of the present invention preferably are hydrocarbon oils. Preferred extending oils are the white mineral oils such as the DRAKEOL™ oils sold by Penreco, ONDINA™ sold by Shell and the TUFFLO™ oils sold by Citgo. Low aromatic content paraffinic / naphthenic process oils are also satisfactory, such as the SHELLFLEX™ oils sold by Shell, and the CALSOL™ oils sold by Calumet. Synthetic oils such as the poly-alpha-olefin oils, polypropylene oils, polybutene oils and the like are also suitable. Any extending oil that is compatible with the block copolymers of the present invention, liquid at ambient temperatures, and known to be useful to those of ordinary skill in the art of preparing the subject article can be used with the present invention.

Vegetable and animal oils include glyceryl esters of fatty acids and polymerisation products thereof.

The olefin oligomers are typically oligomers of C₂ to C₁₂ olefin monomers, preferably C₂ to C₆ olefin monomers. Examples of suitable olefin oligomers include poly(butylene), poly(dodecene), hydrogenated poly(isoprene), hydrogenated poly(butadiene), hydrogenated poly(piperylene) and hydrogenated copolymers of piperylene and isoprene. The olefin oligomers typically have weight average molecular weights in the range from 350 to 35,000 g/mol, preferably from 500 to 10,000 g/mol.

A wide variety of plasticizers can be used to make articles of the present invention. Suitable plasticizers can be synthetic esters, ethers or alcohols, as well as naturally occurring fats and oils. Such plasticizers include the JAYFLEX™ branched alkyl ester plasticizers sold by Exxon, and the BENZOFLEX™ benzoate esters sold by Velsicol. A very complete list of suitable plasticizers is given in US Patent Application Publication 2002/0055562 A1. Any plasticizer that is compatible with the block copolymers of the present invention, liquid at ambient temperatures, and known to be useful to those of ordinary skill in the art of preparing the subject article can be used with the present invention.

Solvents can also be used to prepare articles of the present invention. The selection of solvent will also vary according to the end use of the article. The solvent can function as a plasticizer, but preferably it is a volatile compound that slowly emerges from the gel and performs a function such as masking unpleasant odours or killing or repelling insects. Solvents useful with the present invention can also be volatile hydrocarbon solvents or oxygenated solvents such as esters, ethers or alcohols which evaporate slowly and aid in the release of a functional additive such as an insect repellant or a perfume. Any solvent that is compatible with the block copolymers of the present invention, liquid at ambient temperatures, and known to be useful to those of ordinary skill in the art of preparing the subject article can be used with the present invention.

As noted above, the extending oils, plasticizers and solvents will be present in the gel composition of the present invention in an amount from about 60 to about 90 weight percent, preferably from about 80 to about 90 weight percent.

The expandable composition preferably comprises from 0.1 to 10 weight percent of component (c). Preferably, the heat expandable thermoplastic particles are present in an amount of 0.5 to 6% by weight, more preferably 1 to 5 wt%, most preferably, at least 2% by weight of the expandable composition. The particles may be any suitable shape such as spheres, ovals, prisms or other polyhedrons. Preferred shapes are spheres.

Preferably, the walls of the particles are made of any suitable material such as acrylic plastic or phenolic plastic. Further examples of suitable materials include copolymers of vinyl chloride and vinylidene chloride, copolymers of vinyl chloride and acrylonitrile, copolymers of vinylidene chloride and acrylonitrile, copolymers of styrene and acrylonitrile, copolymers of methyl methacrylate and up to 20 percent by weight of styrene, copolymers of methyl methacrylate and up to 50 percent by weight of ethyl methacrylate, and copolymers of methyl methacrylate and up to70 percent by weight of orthochlorostyrene.

Preferably, the microspheres have a thermoplastic shell encapsulating a gas or a liquid. The liquid is typically a volatile organic liquid which vaporises when heat is supplied. Examples of such organic liquids include C₄ -C₆ alkanes, in particular, n-butane, n-pentane and/or isomers thereof. If a gas is applied, this is typically air or a non-reactive gas.

Typically, the unexpanded particles have a weight average diameter of between 1 and 50µm, preferably between 2 and 30µm, more preferably between 6 and 24µm. When fully expanded, the volume of the particles may increase more than 40 times their original volume. Generally, the expanded particles have a weight average diameter of less than 200µm, more preferably less than 100µm.

The heat expandable thermoplastic particle is normally prepared by suspension polymerisation. A general description of some techniques that can be employed and a detailed description of various compositions that are useful as heat expandable thermoplastic particles can be found in US patent Nos. 3,615,972 and 4,483,889, incorporated herein by reference.

Examples of commercially available heat expandable thermoplastic particles are those marketed under the tradename EXPANCEL™ and MICROPEARL™. The latter comprises a wall of a methacrylonitrile-acrylonitrile copolymer. In a particularly preferred embodiment the particles are microspheres available under the trade name of EXPANCEL™ (Akzo-Nobel, Sweden). The walls of these microspheres are typically made of poly (vinylidene chloride-co-acrylonitrile).

As already indicated supra, it is preferred that the block copolymer is an asymmetric multi-armed block copolymer. An example of a commercially available multi-armed block copolymer is KRATON D-KX222 (KRATON is a trade mark). This polymer has been specially designed to show excellent response to radiation (which can be UV or EB).

During radiation curing, covalent links are created between the polymers chains and the thermoplastic elastomer becomes a flexible thermoset. Temperature resistance above 160 degrees Centigrade can then be observed if the cross-linking density is sufficient.

The composition may but need not comprise a photo-initiator (d). To ensure an efficient UV curing reaction, it may be necessary to add a radical photo-initiator that will initiate the curing reaction. There are two main requirements for a photo-initiator to be used in a UV-curable expandable thermoplastic gel composition: it needs to be stable enough that no cross-linking reaction can occur during the compounding step; it is also necessary that the photo-initiator efficiently initiates the reaction when submitted to UV light of the appropriate wavelengths.

Various photo-initiators meet these requirements. The final selection depends then on different factors such as cost, odour and depth of cure. IRGACURE™ 651 and 819 are cost-efficient and work even in the presence of air. The composition hence may comprise from 0 to 3.0 weight percent photo-initiator, preferably from 0 to 1.5 weight percent.

Useful photo-initiators therefore include:
- benzoin ethers, such as benzoin methyl ether and benzoin isopropyl ether;
- substituted acetophenones and benzophenones such as diethoxyacetophenone and DAROCURE™ BP sold by Ciba;
- benzyldimethyl ketal such as IRGACURE 651 sold by Ciba;
- alpha hydroxyketones such as IRGACURE 184 sold by Ciba; and
- bis acyl phosphine oxides such as IRGACURE 819 sold by Ciba.

The bis acyl phosphine oxide type photo-initiators are particularly preferred for crosslinking compositions of the present invention by exposure to ultraviolet light.

The thermoplastic compositions of this invention may be cured by exposure to a wide variety of electromagnetic radiation sources. Either ionizing radiation such as alpha, beta, gamma, X-rays and high energy electrons or non-ionizing radiation such as ultraviolet, visible, infrared, microwave and radio frequency may be used. Electron beam, ultraviolet and visible radiation sources are preferred.

Where odour or FDA food contact compliance is an issue, EB curing can offer an attractive alternative, as it does not require the use of a photo-initiator. However, this radiation technology is currently less popular than UV mainly because of the higher capital investment required.

Electron beam equipment may be of the high voltage type in which for instance a focused, high energy beam of electrons is scanned across the composition to be cured or of the low energy type in which for instance a curtain of electrons passes through a window of a linear cathode electron beam tube and the composition is passed beneath the curtain.

Sources of ultraviolet light may also be of the high intensity type using lamps in the 200 to 600 watt/inch range or of the low intensity type using lamps in the 5 to 20 watt/inch range. A discharge is placed across the lamps, either through electrodes on either ends of the tubes or by microwave irradiation, generating plasma within the lamp. The material inside the lamp determines the wavelength of emission from the lamp and the type of lamp can be chosen so the radiation emitted from the lamp matches the absorption characteristics of the photo-initiator.

Radiation in the visible region can also be obtained from the same type of equipment used to generate ultraviolet radiation simply by using lamps which contain the appropriate material. Fluorescent lamps, tungsten halide lamps and visible lasers may also be utilized.

Finally, it is also possible to curing through radiation by exposure to sun light, i.e. in outdoor application of the expandable thermoplastic gel composition.

The expandable thermoplastic gel composition may be irradiated before or after the expansion step. When samples are irradiated before the expansion step, they keep the same shape (but enlarged) upon expansion. This sequence of steps would be preferred if the final expanded thermoplastic gel composition is to be part of a larger object that is more easily made by expanding the piece into place.

The total of all components (a) to (d) equals 100 weight percent.

The compositions of the present invention may comprise additional components. For instance, it can additionally have up to 20 weight percent of one or more supplemental components selected from the group consisting of antioxidants, stabilizers, bactericides, fungicides, fire-retardants, pigments, dyes, fragrances and tackifying resins. Any additive known to be useful to those of ordinary skill in the art of preparing articles using gels can be used with the present invention. The composition may further comprise other polymers, such as polyolefins, fillers, and reactants that participate in the cross-linking reaction.

The components of the thermoplastic compositions of the present invention can be combined and mixed to form the thermoplastic compositions in anyway known to be useful to those of ordinary skill in the art of forming thermoplastic gels. Generally, the components are admixed at a temperature which is high enough to allow easy mixing without being so high as to cause the expansion of the expandable thermoplastic particles, and for a period of time long enough to form a homogeneous composition and then the composition is cooled to room temperature forming the thermoplastic gel. If necessary, an excess of solvent can be used and then removed by stripping at an elevated temperature.

The expandable compositions of the present invention can be fabricated into articles by any process known to be useful to those of ordinary skill in the art of preparing such articles. Such processes include, but are not limited to molding, pouring, extruding, and the like.

While not wishing to be bound to any theory, it is never the less believed that the crosslinking of the polymer serves to convert the thermoplastic compositions to thermoset compositions. Once converted, the thermoset compositions of the present invention can be used at comparatively high temperatures without deforming or running, making these compositions desirable for the claimed applications as well as other gel applications where these properties would be advantageous.

**Examples**

The following examples are provided to illustrate the present invention. The examples are not intended to limit the scope of the present invention and they should not be so interpreted. Amounts are in weight parts or weight percentages unless otherwise indicated.

Two polymers are used to demonstrate the invention. Polymer A is of the type described in WO 9324547 **.** Polymer A is an (S-B)₂ -Y-B₂ where S is a polystyrene block, B is a polybutadiene block having a 1,2-vinyl content is 55% and Y is a coupling agent residue. The polymer is characterized in Table 1. The other polymer used herein for comparative purposes is KRATON® G-1654, which has been used in WO 93024547 **.**

**Table 1**

| | Polymer A |
|---|---|
| Polymer Type | (S-B)₂ -Y-(B) 2 |
| Weight Percent | |
| % S | 17 |
| % B | 83 |

| Molecular Weight, kg/mol | |
|---|---|
| S Block | 15 |
| B Block | 40 |
| Coupling Efficiency, % | 90 |
| Viscosity @ 25%, cps | 2000 |

The other ingredients used in the examples are identified as follows:

**Table 2**

| Ingredient | Supplier | Description |
|---|---|---|
| KRATON® G1654 | KRATON | S-EB-S Polymer, 30% w Polystyrene |
| ONDINA™ N68 | Shell | White mineral oil |
| IRGANOX™ 1726 | Ciba | Hindered phenol type antioxidant |
| IRGACURE™ 819 | Ciba | Bis Acyl Phosphine Oxide type photoinitiator |
| AC-D9 | Honeywell | Polyethylene wax |
| EXPANCEL™ DU091/80 | Akzo Nobel | Expandable microspheres |

**Sample preparation**

The following compositions were selected to be tested. F1, F2 and F5 are comparative examples. F1 and F2 do not contain EXPANCEL and therefore were not foamed. F1 does not contain photo-initiator; F2 is a traditional KRATON G based oil gel. F5 is an expandable oil gel as described in WO 9923144 .

Oil gels were prepared by dissolving the block copolymer in the oil, pre-heated to 140°C. The block copolymer was added gradually under moderate mixing. Total mixing time was 2 hours. The oil gels were then allowed to cool to 120°C and the EXPANCEL microspheres and/or the IRGACURE were added under moderate mixing. Mixing time was 15 minutes. The resultant mixture was then allowed to cool down to room temperature. Pieces were cut, placed into an open mould (dimensions 6 x 6 x 0.6 cm) and compressed moulded at 100°C for 5 minutes. Details on the Formulations may be found in Table 3.

**Table 3, Formulations**

| | **Polymer A** | **ONDINA N68** | **IRGANOX 1726** | **IRGACUR E 819** | **EXPANC EL 91 DU80** | **Other** |
|---|---|---|---|---|---|---|
| F1 | 20 | 79.9 | 0.1 | 0 | 0 | 0 |
| F2 | 10 (*) | 89.9 | 0.1 | 0 | 0 | 0 |
| F3 | 20 | 77.6 | 0.1 | 0.3 | 2 | 0 |
| F4 | 20 | 72.6 | 0.1 | 0.3 | 2 | 5 (**) |
| F5 | 10 (*) | 87.9 | 0.1 | 0 | 2 | 0 |
| F6 | 10 | 87.6 | 0.1 | 0.3 | 2 | 0 |
| F7 | 19 | 76.6 | 0.1 | 0.3 | 4 | 0 |

| | | | | | | |
|---|---|---|---|---|---|---|
| (*) KRATON® G-1654 instead of Polymer A. (**) HONEYWELL™ AC-D9 | | | | | | |

Some samples were irradiated before foaming, others after. In an initial sequence of testing two UV sources have been used: "natural" UV light (the samples were stored for a couple of weeks under the neon lighting of the fume cupboard) and a mercury UV arc lamp. Both forms of irradiation have proven to be successful. As to the examples herein described, the irradiation is done by the mercury UV arc lamp.

The foaming was performed in an oven. When the samples are irradiated before foaming, they keep the same shape (but enlarged) upon expansion.

The samples were stored at room temperature and were visually inspected every day.

**Table 4, temperature resistance, oil bleeding**

| | **I/F (*)** | **Physical aspect & Density (g/m**^{**3**}**)** | **Oil bleeding** | **Temperature resistance (140°C)** |
|---|---|---|---|---|
| F1 | No I, no F | Sticky, soft 0.87 | After one day | Destroyed after 10 minutes |
| F2 | No I, no F | Sticky, soft 0.87 | After one day | Destroyed after 10 minutes |
| F3 | 1. I, 2. F | Not sticky 0.62 | No bleed out after 2 weeks | Slightly yellow after 24h, shape still acceptable |
| F3 | 1. F, 2. I | Not sticky 0.60 | No bleed out after 2 weeks | Slightly yellow after 24h, shape still acceptable |
| F3 | F, No I. | Not sticky 0.60 | No bleed out after 2 weeks | Destroyed after 10 minutes |
| F3 | No I, no F | sticky 0.87 | No bleed out after 2 weeks | Destroyed after 10 minutes |
| F4 | 1. I, 2. F | Not sticky 0.58 | No bleed out after 2 weeks | Slightly yellow after 2 hours, one side a bit damaged. Yellow after 24h shape still acceptable |
| F4 | 1. F, 2. I | Not sticky 0.70 | No bleed out after 2 weeks | Slightly yellow after 2 hours. Yellow after 24h shape still acceptable |
| F4 | F, No I | Not sticky 0.70 | No bleed out after 2 weeks | Destroyed after 10 minutes |
| F4 | No I, no F | Slightly sticky 0.86 | No bleed out after 2 weeks | Destroyed after 10 minutes |
| F5 | F, no I | Not sticky 0.74 | No bleed out after 2 weeks | Destroyed after 10 minutes |
| F6 | 1. I; 2. F | oily 0.55 | After one day | Destroyed after few hours |
| F6 | 1. F; 2. I | oily 0.53 | After one day | Destroyed after few hours |
| F7 | 1. I; 2. F | Not sticky 0.55 | No bleed out after 2 weeks | Yellow after 24h shape still acceptable |
| F7 | 1. F; 2. I | Not sticky 0.42 | No bleed out after 2 weeks | Yellow after 24h bottom damaged |

| | | | | |
|---|---|---|---|---|
| (*) I = irradiation, F = expansion (foaming); | | | | |

**Observations**:
- The foamed samples with 20 wt% of Polymer A do not show any oil bleed out after 2 weeks at room temperature. Samples that did not contain the expandable particles showed oil bleeding.
- Temperature resistance: non cured oil gels do not withstand 10 minutes in the oven at 140°C (F1, F2 and F5).
- All the cured oil gels with 20 wt% Polymer A withstood 24 hours in the oven at 140°C without change in shape. The formulation with 10 wt% of Polymer A is apparently not sufficient to have similar temperature resistance level. It however kept its shape for several hours before flowing.
- The foaming process decreased the oil gel density, from 0.9 till 0.42, depending on the EXPANCEL content. The difference in density between the two processes (irradiation then foaming or foaming then irradiation) is most probably due to the experimental error.

**Mechanical properties**
- Compression set was performed according to ASTM D395 B. The lower the result, the better the behaviour of the sample tested.
- The compression was measured when the sample was kept for 24h at 70°C and 100°C and when the sample stayed for 1 week at room temperature.
- Tensile strength was measured according to ASTM 412. The results reported are modulus at 100% deformation, 300%, the elongation at break and the force at break.
- The drop point was also measured on the different gels. It is an expression of the temperature at which the gel passes from a semisolid to the liquid state. It was measured using a Mettler FP Thermosystem. The method is similar to ASTM D3104-82 except that the cup has a bottom hole of 4.2 mm diameter and the temperature is raised at 5°C per minute.

Observations
- Drop points above 200°C can only be observed on cured samples.
- Compression set at room temperature is always very good, for cured and uncured, for foamed and unfoamed.
- Good compression set at high temperature (up to 100°C) can only be achieved for cured samples. Best results are obtained with 2 wt% EXPANCEL.
- The results obtained with F7 are not optimized for this high level of foaming agent.

**Table 5**

| | | Compression set % | | | Drop point deg C |
|---|---|---|---|---|---|
| | | 24h @ 70°C | 24h @ 100° C | 1 week @ room T | |
| F1 | No I, No F | 228 | - | 0 | 121 |
| F2 | No I, No F | 174 | - | 0 | 151 |
| F3 | 1. I; 2. F | 39 | 50 | 0 | >200 |
| F3 | 1. F; 2. I | 43 | | 5 | |
| F3 | F; no I | / | | 7 | |
| F4 | 1. I; 2. F | 65 | | 0 | |
| F4 | 1. F; 2. I | 40 | | 1 | |
| F4 | F; no I | / | | 3 | |
| F4 | No I; No F | / | | 0 | |
| F5 | F; no I | 124 | | 0 | 154 |
| F6 | No I; No F | | | | 104 |
| F6 | 1. I; 2. F | 47 | 50 | 13 | >200 |
| F6 | 1. F; 2. I | 37 | 40 | 0 | |
| F7 | 1. I; 2. F | 60 | 65 | 10 | >200 |
| F7 | 1. F; 2. I | 50 | 55 | 0 | |

**Table 6, Tensile strength**

| | | **Modulus 100% (MPa)** | **Modulus 300% (MPa)** | **F at break (MPa)** | **Elongation at Break %** |
|---|---|---|---|---|---|
| F1 | No I; no F | Could not be measured | | | 700 estimated |
| F2 | No I; no F | Could not be measured | | | 1200 estimated |
| F3 | 1. I; 2. F | 0.04 | 0.1 | 0.07 | 379 |
| F3 | 1. F; 2. I | 0.09 | - | 0.14 | 233 |
| F4 | 1. I; 2. F | 0.1 | 0.23 | 0.19 | 340 |
| F4 | 1. F; 2. I | 0.23 | - | 0.29 | 188 |
| F4 | F, no I | 0.14 | - | 0.15 | 219 |
| F5 | F, no I | 0.03 | 0.07 | 0.05 | 540 |

**Observations:**
- F5 is the formulation described in the prior art. The properties of the exampanded oil gels according to the present invention show at least similar tensile strenghth properties, whilst having improved high temperature performance as is shown in Table 4 and 5.

### Industrial applicability

The compositions of the present invention may be used in sealants, carpet backing and other shock absorbing applications such as automobile bumpers, shoe insoles, adhesives and coatings. The foam of the present invention could be used in gasketing systems, particularly where the injection of a low viscosity melt is required followed by heat treating. This is particularly advantageous in the automobile industry where pre-foam melt can be injected by suitable equipment directly onto the car body part and subsequently heated to expand the hollow particles. Melt injection of gasketing material encourages much greater freedom among design engineers who wish to create complex shapes and configurations for doors, lights, bonnets etc.

## Claims

1. An expandable thermoplastic gel composition comprising (a) a block copolymer comprising at least one polymer block A derived from a monovinyl aromatic compound and at least one polymer block B derived from a conjugated diene; (b) a liquid component selected from the group consisting of extending oils, plasticizers and solvents which are compatible with the aforementioned block copolymer (a); and (c) heat expandable thermoplastic particles encapsulating heat expandable gas or liquefied gas, **characterized in that** the block copolymer (a) is a block copolymer that may be cross-linked by exposure to radiation and that has a monovinyl aromatic compound content from about 7% by weight to about 35% by weight based on total polymer, a total apparent molecular weight of from about 50,000 to about 1,500,000 and a vinyl content in block B of from about 10 to about 80 mole%, preferably from about 20 to 75 mole%, more preferably from about 35 to about 70 mole%.

2. The expandable thermoplastic gel composition of claim 1 wherein the block copolymer used as component (a) is selected from diblock copolymers of formula AB; triblock copolymers of formula ABA and multiblock copolymers of formulae A(BA)ₙ and AB(AB)ₙ wherein n is an integer of 2 or higher.

3. The expandable thermoplastic gel composition of claim 1 wherein component (a) is a coupled block copolymer having a structure according to any one of the general formulas (AB)ₙ X, (BA)ₙ X, (ABA)ₙ X, (BAB)ₙ X as well as asymmetric or symmetric multi-armed block copolymers of the general formula (AB)ₚ X(B)_{q} with A and B as defined above, n representing an integer of 2 or higher and preferably 2 to 20, and p and q together representing similar values, depending on the functionality of the coupling agent used, of which coupling agent the residue is represented by X.

4. The expandable thermoplastic gel composition of claim 1 wherein the aromatic monovinyl compound to be used in the block copolymer of component (a) is selected from styrene, alpha-methylstyrene, p-methylstyrene, o-methylstyrene, p-tert.butylstyrene, dimethylstyrene, diphenyl ethylenes such as stilbene, vinylnaphtalene, vinyltoluene (an isomeric mixture of p-methylstyrene and o-methylstyrene), vinylxylene, and mixtures thereof.

5. The expandable thermoplastic gel composition of claim 1 wherein the conjugated diene to be used in the block copolymer of component (a) is selected from 1,3-butadiene, 2-methyl-1,3-butadiene (isoprene), 2,3-dimethyl- 1,3-butadiene, 1,3-pentadiene, 1,3-hexadiene or mixtures thereof.

6. The expandable thermoplastic gel composition of claim 1 wherein the block copolymer is the styrenic block copolymer having the general formula (AB)ₚ X(B)_{q}
wherein A is a poly(vinyl aromatic compound) block and B is a poly(butadiene) block having a 1,2-vinyl content of between 10 and 80 mol percent, preferably between 10 and 75 mol percent, more preferably between 35 and 70 mol percent, most preferably 45 to 65 mol percent, X is a coupling agent residue, p has a number average value of at least 1.5 and q has a number average value of 0 or higher wherein the sum of p and q values is at least 3, the block copolymer having an average bound vinylaromatic content in the range of from 7 to 35 wt%, and preferably in the range of from 10 to 20 wt%, and having a total apparent molecular weight in the range of from 50,000 to 1,500,000.

7. The expandable thermoplastic gel composition of claim 1 wherein component (a) is a mixture of styrenic block copolymers, of which at least one is the radiation curable block copolymer.

8. The expandable thermoplastic gel composition of claim 1 wherein component (a) is selectively hydrogenated, to the extent that sufficient vinyl groups are left in block B to allow it to be cross-linked by exposure to radiation.

9. The expandable thermoplastic gel composition of anyone of claims 1 to 8, comprising from 10 to 40 weight percent of component (a).

10. The expandable thermoplastic gel composition according to claim 1, comprising from 60 to 90 weight percent of a liquid component (b) selected from the group consisting of extending oils, vegetable and animal oils, olefin oligomers, plasticizers and solvents which are compatible with the cross-linkable block copolymer.

11. The expandable thermoplastic gel composition according to claim 1, comprising from 0.1 to 10 weight percent of component (c).

12. The expandable thermoplastic gel composition according to claim 1, comprising from 0 to 3.0 weight percent of a photo-initiator.

13. A process for producing an expanded thermoplastic gel composition comprising the steps of:
(1) forming an expandable thermoplastic gel composition comprising components (a), (b), (c) and optionally a photo-initiator (d);
(2) heat treating the expandable composition to cause the heat expandable thermoplastic particles (c) to expand and produce an expanded thermoplastic gel composition; and
(3) exposing the expanded thermoplastic gel composition to radiation to effect cross-linking.

14. A process for producing an expanded thermoplastic gel composition comprising the steps of:
(1) forming an expandable thermoplastic gel composition comprising components (a), (b), (c) and optionally a photo-initiator (d);
(2) exposing the expandable thermoplastic gel composition to radiation to effect cross-linking; and
(3) heat treating the cross-linked expandable thermoplastic gel composition to cause the said particles to expand and produce an expanded thermoplastic gel composition.

15. The use of an expanded thermoplastic gel composition as claimed in any one of claims 1 to 12, in automotive appliances; in applications such as cable filling, re-enterable sealing of electrical connections, vibration damping, pressure relief, toys, cushioning, grips, therapeutic and orthopaedic devices, and in flexographic printing plates.
